Europäisches Patentamt

European Patent Office

Office européen des brevets

(19)

(11) Veröffentlichungsnummer: **0 403 490 B1**

(12) **EUROPÄISCHE PATENTSCHRIFT**

(45) Veröffentlichungstag der Patentschrift:
06.11.91 Patentblatt 91/45

(51) Int. Cl.⁵: **B60K 15/077**

(21) Anmeldenummer: **89901713.1**

(22) Anmeldetag: **31.01.89**

(86) Internationale Anmeldenummer:
**PCT/EP89/00077**

(87) Internationale Veröffentlichungsnummer:
**WO 89/07536 24.08.89 Gazette 89/20**

(54) **KRAFTSTOFFBEHÄLTER FÜR KRAFTFAHRZEUGE.**

(30) Priorität: **12.02.88 DE 3804407**

(43) Veröffentlichungstag der Anmeldung:
**27.12.90 Patentblatt 90/52**

(45) Bekanntmachung des Hinweises auf die
Patenterteilung:
**06.11.91 Patentblatt 91/45**

(84) Benannte Vertragsstaaten:
**DE FR GB**

(56) Entgegenhaltungen:
**DE-C- 3 437 475
US-A- 2 010 445
US-A- 3 698 597
US-A- 4 501 374**

(73) Patentinhaber: **AUDI AG
Auto-Union-Strasse 1 Postfach 220
W-8070 Ingolstadt (DE)**

(72) Erfinder: **STEGE, Jürgen
Lindenstrasse 17
W-8069 Rohrbach (DE)**

(74) Vertreter: **Speidel, Eberhardt
Postfach 1320 Waldpromenade 26
W-8035 Gauting (DE)**

## Beschreibung

Kraftstoffbehälter für Kraftfahrzeuge

Die Erfindung bezieht sich auf einen Kraftstoffbehälter für Kraftfahrzeuge entsprechend dem Oberbegriff des Anspruchs 1.

Beim Betanken der üblichen Kraftstoffbehälter findet eine starke Vermischung zwischen dem Kraftstoff und dem Luftvolumen des Behälters statt. Dadurch enthält die beim Betanken aus dem Kraftstoffbehälter verdrängte Luft einen hohen Anteil an Kohlenwasserstoffen. Außerdem kann eine starke Schaumbildung, insbesondere bei Diesel-Kraftstoffen, eintreten.

Zur Zeit werden gesetzliche Maßnahmen erwogen, um das Austreten von Kraftstoffdämpfen in die Atmosphäre während des Betankens zu verhindern. Zur Lösung dieses Problems werden aufwendige Absaugeeinrichtungen in Verbindung mit der Zapfpistole oder Ventile im Einfüllstutzen vorgeschlagen, die durch die Zapfpistole aufgestoßen werden und die eine Dichtung aufweisen, welche die Zapfpistole dichtend umschließt. Diese Lösungen sind aufwendig und sie verhindern nicht ein Verschäumen des Kraftstoffes und ein Beladen der Luft im Kraftstoffbehälter mit Kraftstoffdämpfen, die nach dem Starten der Brennkraftmaschine über Aktivkohlefilter in das Ansaugsystem der Brennkraftmaschine geführt werden müssen. Der hohe Anfall an Kraftstoffdämpfen bedingt einen entsprechend großen Aktivkohlefilter, dessen Unterbringung im Motorraum des Fahrzeuges erhebliche Probleme bereitet.

Um insbesondere ein Verschäumen des Kraftstoffes beim Betanken zu vermeiden oder zu verringern, ist es bekannt (DE-C-34 37 475), im Behälterinneren eine Kraftstoffführungsfläche vorzusehen, die sich von der Mündung des Einfüllstutzens in einem Bogen bis nahe an den Behälterboden erstreckt. Beim Betanken fällt der Kraftstoff nicht mehr vom Ende des Einfüllstutzens frei bis zum Behälterboden bzw. bis zum Niveau des in dem Behälter noch befindlichen Kraftstoffes, sondern er wird entlang dieser Fläche nach unten geführt, so daß das Verschäumen des Kraftstoffes und das Vermischen von Kraftstoffdämpfen mit der Luft im Behälter vermieden oder verringert werden soll. Diese Erwartung kann jedoch nur zum Teil erfüllt werden, da der Kraftstoff beim Betanken mit verhältnismäßig hohem Druck bereits im Einfüllstutzen teilweise verwirbelt wird und sich beim Austreten aus demselben nur zu einem geringen Teil an der Kraftstoffführungsfläche anlegt.

Die gattungsbildende US-A-20 10 445 offenbart einen Kraftstoffbehälter mit einem Einfüllstutzen, an den sich ein Rohr anschließt, das sich bis zum Behälterboden erstreckt oder nahe desselben endet. Das Rohr ist mit Längsschlitzen versehen und von einem Sieb umgeben. Zweck der bekannten Anordnung ist es, eine Filterung des Kraftstoffes beim Betanken zu erreichen, ohne daß die Gefahr besteht, daß das Sieb durch das Füllrohr der Zapfpistole beschädigt wird. Mit dieser bekannten Anordnung läßt sich ein Verschäumen des Kraftstoffes und ein Beladen des Luftvolumens mit Kraftstoffdämpfen während des Betankens nicht vermeiden, da der Kraftstoff beim Einfüllen auf die Kanten der Längsschlitze trifft und verstärkt verwirbelt wird. Der Kraftstoff und der Kraftstoffdampf treten durch die Längsschlitze und durch das diese umgebende Sieb quer zur Längsrichtung des Rohres in den Innenraum des Kraftstoffbehälters ein, wobei das Sieb nicht in der Lage, ist, zu verhindern, daß die im Inneren des Kraftstoffbehälters befindlichen Kraftstoffdämpfe beim Betanken durch das Sieb hindurch zum Einfüllstutzen und damit in die Atmosphäre gelangen.

Ausgehend von der US-A-20 10 445 liegt der Erfindung die Aufgabe zugrunde, einen Kraftstoffbehälter der gattungsgemäßen Art zu schaffen, bei dem mit einfachen Mitteln einerseits ein Verschäumen des Kraftstoffes und ein Beladen des Luftvolumens mit Kraftstoffdämpfen während des Betankens vermindert und andererseits ein Austreten von mit Kraftstoffdämpfen vermischter Luft während des Betankens weitestgehend vermieden ist.

Diese Aufgabe wird erfindungsgemäß durch die im Kennzeichen des Anspruchs 1 angegebenen Merkmale gelöst.

Bei dem erfindungsgemäßen Kraftstoffbehälter fließt der Kraftstoff beim Betanken vom Einfüllstutzen in dem offenporigen Bauteil zum Behälterboden. Dabei wird der Kraftstoff in den Poren nach unten geleitet und jede Wirbelbildung und das dadurch bewirkte Entstehen von Kraftstoffdämpfen weitgehend vermieden. Da die offenen Poren weitgehend mit Kraftstoff gefüllt bleiben, entsteht ein Gassperre, die verhindert, daß der Luftinhalt des Kraftstoffbehälters durch den Einfüllstutzen ins Freie austritt. Er kann in üblicher Weise über ein Entlüftungsventil und einen Aktivkohlefilter dem Ansaugsystem der Brennkraftmaschine zugeführt werden. Bedeutsam ist dabei, daß aufgrund der nicht eintretenden Verwirbelung des Kraftstoffes während des Betankens die Luft im Behälter nur in geringem Maße mit Kraftstoffdämpfen beladen ist.

Das Bauteil aus offenporigem Material sollte zumindest teilweise, insbesondere in nicht senkrechten Abschnitten, mit einer gas- und flüssigkeitsundurchlässigen Umhüllung versehen sein, um ein Abtropfen von Kraftstoff aus diesen Abschnitten während des Betankens zu vermeiden und ein Eindringen von mit Kraftstoffdämpfen beladener Luft durch die poröse Wand in das Innere des Rohres möglichst zu verhindern.

Als Material für das bauteil hat sich kraftstoffbeständiger, offenporiger Schaumkunststoff als sehr geeignet erwiesen. Vorzugsweise ist das bauteil ein Rohr. Die Porengröße, die Wandstärke und der Innendurchmesser eines derartigen Schaumstoffrohres werden so gewählt, daß der durch das Rohr entstehende Strömungswiderstand klein genug ist, um ein ordnungsgemäßes Betanken ohne Stau zu gewährleisten.

Anstelle eines offenporigen Schaumkunststoffes kann insbesondere bei einem Rohr für das offenporige Material auch ein Metall- oder Kunststoffaser-Gewebe verwendet werden.

Um bereits im Einfüllstutzen eine Verwirbelung des Kraftstoffes weitgehend zu vermeiden, kann es sich alszweckmäßig erweisen, den Einfüllstutzen mit einem offenporigen Material auszukleiden.

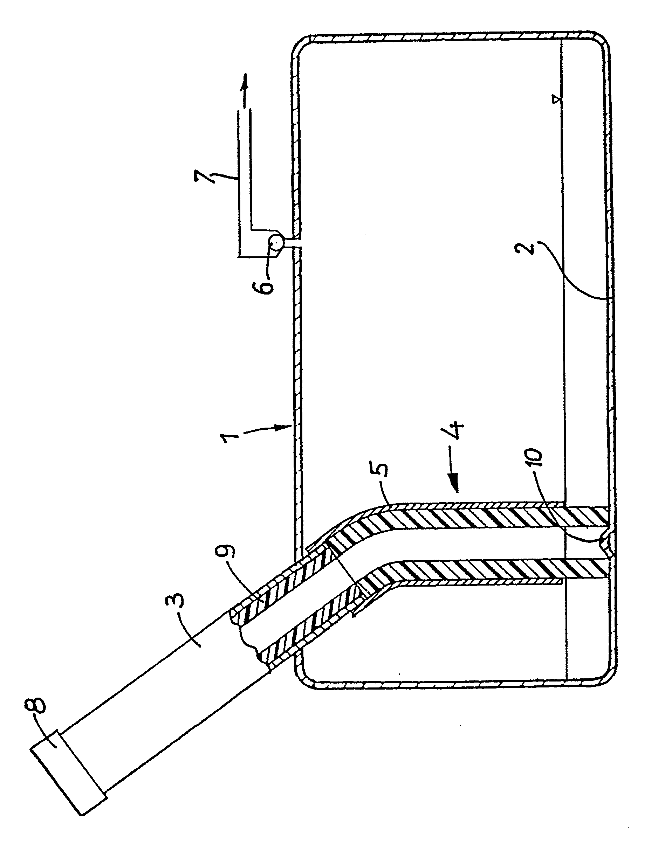

Ein Ausführungsbeispiel der Erfindung wird im folgenden unter Bezugnahme auf die Zeichnung beschrieben, in welcher ein Kraftstoffbehälter schematisch im Schnitt dargestellt ist.

In der Zeichnung ist mit 1 der Kraftstoffbehälter bezeichnet, in den in einem Abstand vom Behälterboden 2 ein Einfüllstutzen 3 einmündet. An den Einfüllstutzen 3 schließt sich ein Rohr 4 an, das sich bis zum Behälterboden 2 erstreckt oder nahe desselben endet. Das Rohr 4 besteht beispielsweise aus einem kraftstoffbeständigen, offenporigen Schaumstoff. Beim Betanken fließt der Kraftstoff weitgehend wirbelfrei in der Schaumstoffwand des Rohres 4 nach unten. Dadurch wird das Entstehen von Kraftstoffdämpfen und ein Vermischen derselben mit dem Luftvolumen im Behälter 1 weitgehend vermieden.

Vorzugsweise ist die Schaumstoffwand des Rohres 4 von einer gas- und flüssigkeitsundurchlässigen Umhüllung 5 versehen. Diese Umhüllung kann während der Herstellung des Schaumstoff-Rohres 4 von einer geschlossenen Außenhaut oder auch von einem eigenen rohrförmigen Körper gebildet sein, der aus Kunststoff, gegebenenfalls aber auch aus Metall bestehen kann. Die Umhüllung 5 kann sich über die ganze Länge des Rohres 4 mit Ausnahme eines Abschnittes am unteren Ende des Rohres, durch den der Kraftstoff in den Behälter 1 übertreten kann, erstrecken. Es kann jedoch ausreichend sein, die Umhüllung nur, falls vorhanden, in einem nicht senkrechten Bereich des Rohres 4 vorzusehen, um ein Abtropfen von Kraftstoff aus diesem Bereich zu verhindern.

Das Rohr 4 bildet insbesondere dann, wenn es mit einer Umhüllung 5 versehen ist, eine wirksame Gassperre, welche verhindert, daß beim Betanken mit Kraftstoffdämpfen beladene Luft aus dem Einfüllstutzen 3 entweicht. Zur Entlüftung dient vielmehr eine von einem Ventil 6 beherrschte Entlüftungsleitung 7, die über einen nicht gezeigten Aktivkohlefilter mit dem Ansaugsystem der Brennkraftmaschine verbunden ist. Die Belüftung des Kraftstoffbehälters 1 während des Betriebes erfolgt durch bekannte Maßnahmen, beispielsweise ein Belüftungsventil im Tankverschlußdeckel 8.

Um eine Verwirbelung des Kraftstoffes bereits im Einfüllstutzen 3 weitgehend zu vermeiden, karn dieser mit einer porösen Auskleidung 9 versehen sein. Der Einfüllstutzen 3 kann mit dem Rohr 4 als Einheit hergestellt und in den Behälter 1 eingesetzt werden. Zur Halterung des unteren Endes des Rohres 4 kann der Behälterboden 2 mit einer Einprägung 10 versehen sein.

Selbstverständlich sind zahlreiche Abwandlungen des dargestellten Ausführungsbeispiels möglich, ohne den Rahmen der Erfindung zu verlassen. So kann anstelle des Rohres 4 ein sich vom Einfüllstutzen 3 bis zum Boden 2 des Behälters 1 erstreckender, stangenförmiger Schaumstoffkörper vorgesehen sein, der naturgemäß eine so große Porosität bzw. so große Poren haben muß, daß sein Strömungswiderstand nicht unzulässig hoch ist. Alternativ kann anstelle eines Schaumkunststoff-Rohres auch ein Schlauch aus Metall- oder Kunststoffaser-Gewebe verwendet werden.

**Patentansprüche**

1. Kraftstoffbehälter für Kraftfahrzeuge mit einem Einfüllstutzen (3), an den sich ein Bauteil (4) anschließt, das sich bis zum Behälterboden (2) erstreckt oder nahe desselben endet, **dadurch gekennzeichnet,** daß das Bauteil (4) aus einem offenporigen Material besteht, in dessen Poren der Kraftstoff zum Behälterboden (2) fließt.

2. Kraftstoffbehälter nach Anspruch 1, dadurch gekennzeichnet, daß das Bauteil (4) zumindest teilweise, insbesondere in nicht senkrechten Abschnitten, mit einer gas- und flüssigkeitsundurchlässigen Umhüllung (5) versehen ist.

3. Kraftstoffbehälter nach Anspruch 1, dadurch gekennzeichnet, daß das Bauteil (4) aus einem offenporigen Schaumkunststoff besteht.

4. Kraftstoffbehälter nach einem der Ansprüche 1 bis 3, dadurch gekennzeichnet, daß das Bauteil ein Rohr ist.

5. Kraftstoffbehälter nach Anspruch 4, dadurch gekennzeichnet, daß die Wand des Rohres von einem Metall-oder Kunststoffaser-Gewebe gebildet ist.

6. Kraftstoffbehälter nach einem der Ansprüche 1 bis 5, dadurch gekennzeichnet, daß der Einfüllstutzen (3) mit einem offenporigen Material (9) ausgekleidet ist

7. Kraftstoffbehälter nach Anspruch 6, dadurch gekennzeichnet, daß der Einfüllstutzen (3) und das Bauteil (4) zu einer Einheit zusammengefaßt sind.

**Claims**

1. Fuel tank for motor vehicles, with a filling spout (3) which is adjoined by a component (4) which extends all the way to the tank bottom (2) or terminates near same, **characterized** in that the component (4) consists of an open-pore material in whose pores the fuel flows to the tank bottom (2).

2. Fuel tank of claim 1, characterized in that the component (4) is provided at least partially, especially in non-vertical sections, with a covering (5) impermeable to gas and liquids.

3. Fuel tank of claim 1, characterized in that the component (4) consists of an open-pore plastic foam.

4. Fuel tank of any one of claims 1 to 3, characterized in that the component is a tube.

5. Fuel tank of claim 4, characterized in that the wall of the tube is formed by a metal or plastic fiber mesh.

6. Fuel tank of any one of claims 1 to 5, characterized in that the filling tube (3) is lined with an open-pore material (9).

7. Fuel tank of claim 6, characterized in that the filling tube (3) and the component (4) are combined in one unit.


**Revendications**

1. Réservoir de carburant pour véhicules à moteur, comprenant une tubulure de remplissage (3) suivie d'un élément (4) lequel s'étend jusqu'au fond (2) du réservoir ou se termine à proximité de celui-ci, **caractérisé en ce** que l'élément (4) est constitué d'un matériau à porosité ouverte dans les pores duquel le carburant s'écoule vers le fond (2) du réservoir.

2. Réservoir de carburant selon la revendication 1, caractérisé en ce que l'élément (4) est muni au moins partiellement, et notamment dans les sections non verticales, d'une gaine (5) imperméable aux gaz et aux liquides.

3. Réservoir selon la revendication 1, caractérisé en ce que l'élément (4) est constitué d'une matière plastique cellulaire à porosité ouverte.

4. Réservoir de carburant selon l'une des revendications 1 à 3, caractérisé en ce que l'élément est un tube.

5. Réservoir de carburant selon la revendication 4, caractérisé en ce que la paroi du tube est constituée par un tissu métallique et de fibres synthétiques.

6. Réservoir de carburant selon l'une des revendications 1 à 5, caractérisé en ce que la tubulure de remplisage (3) est revêtue intérieurement d'une matière (9) à porosité ouverte.

7. Réservoir de carburant selon la revendication 6, caractérisé en ce que la tubulure de remplissage (3) et l'élément (4) sont groupés en une unité.